# EUROPEAN PATENT APPLICATION

(11) **EP 4 787 141 A1**
(43) Date of publication of application: **05.08.2026**
(21) Application number: 24907760.3
(22) Date of filing: 31.10.2024
(51) Int. Cl.: G06F 3/14, H02J 50/00, H04W 4/80, G02F 1/1347, G02F 1/137, G09G 3/20

(54) **DISPLAY DEVICE WITH DETACHABLE SWITCHABLE MIRROR AND METHOD FOR CONTROLLING SAME**

(30) Priority: 22.12.2023 KR 20230190102
(71) Applicant: Samsung Electronics Co., Ltd., Suwon-si, Gyeonggi-do 16677 (KR)
(72) Inventor: YU, Injae, Suwon-si Gyeonggi-do 16677 (KR); KANG, Han, Suwon-si Gyeonggi-do 16677 (KR); LEE, Sunggyu, Suwon-si Gyeonggi-do 16677 (KR)
(74) Representative: Appleyard Lees IP LLP
(86) International application number: PCT/KR2024/016929
(87) International publication number: WO 2025/135475

(57) **Abstract**

A display device is disclosed. The display device comprises: a display panel; and at least one processor that controls the display panel to display content over the entire area, identifies an area remaining after excluding a portion of the entire area overlapping the switchable mirror when a switchable mirror, attachable to and detachable from the display device, is attached to the display panel, and controls the display panel to display content converted on the basis of the size of the identified remaining area on the remaining area.

## Description

### [Technical Field]

The disclosure relates to a display device and a method for controlling the same, and more particularly, to a display device from which a switchable mirror is detachable, and a method for controlling the same.

### [Background Art]

Fueled by development of electronic technologies, various types of electronic apparatuses are being developed and distributed. In particular, recently, various types of electronic apparatuses including TVs are being used in general homes. These electronic apparatuses gradually got to be equipped with various functions according to users' demands.

As an example, it has now become possible to be provided with various types of services through a mirror display that provides both of a mirror function and a display function. For example, a mirror display can reflect a user, and at the same time, display a content.

For a mirror display, there has been a demand for a method for controlling it to operate as glass, a mirror, or a display device according to a user's intent or situation. In particular, there has been a demand for a method for utilizing various types of display devices as a mirror display.

### [Disclosure of Invention]

### [Solution to Problem]

A display device according to an embodiment of the disclosure includes a display panel, and at least one processor configured to control the display panel to display a content over an entire area, and based on a switchable mirror detachable from the display device being attached to the display panel, identify a remaining area excluding a partial area overlapping the switchable mirror in the entire area, and control the display panel such that the content converted based on the size of the identified remaining area is displayed in the remaining area.

A method for controlling a display device according to an embodiment of the disclosure includes the steps of controlling a display panel to display a content over an entire area, and based on a switchable mirror detachable from the display device being attached to the display panel, identifying a remaining area excluding a partial area overlapping the switchable mirror in the entire area, and displaying the content converted based on the size of the identified remaining area in the remaining area.

According to an embodiment of the disclosure for achieving the aforementioned purpose, in a computer-readable recording medium including a program executing a method for controlling a display device, the controlling method for a display device includes the steps of controlling a display panel to display a content over an entire area, and based on a switchable mirror detachable from the display device being attached to the display panel, identifying a remaining area excluding a partial area overlapping the switchable mirror in the entire area, and displaying the content converted based on the size of the identified remaining area in the remaining area.

### [Brief Description of Drawings]

FIG. 1 is a diagram for illustrating a display device and a switchable mirror according to an embodiment of the disclosure;
FIG. 2 is a diagram for illustrating a display device to which a switchable mirror is attached according to an embodiment of the disclosure;
FIG. 3 is a block diagram illustrating a configuration of a display device according to an embodiment of the disclosure;
FIG. 4 is a block diagram illustrating a configuration of a switchable mirror according to an embodiment of the disclosure;
FIG. 5 and FIG. 6 are diagrams for illustrating a configuration of a switchable mirror according to an embodiment of the disclosure;
FIG. 7 is a diagram for illustrating a display device that transmits wireless power to a switchable mirror according to an embodiment of the disclosure;
FIG. 8 is a diagram for illustrating a switchable mirror whose reflectance was adjusted according to an embodiment of the disclosure;
FIG. 9 is a diagram for illustrating a display device that displays a content over an entire area according to an embodiment of the disclosure;
FIG. 10 is a diagram for illustrating a display device that provides a mirror image to a partial area by using a switchable mirror according to an embodiment of the disclosure;
FIG. 11 is a diagram for illustrating a display device that provides a converted content and a mirror image according to an embodiment of the disclosure;
FIG. 12 is a diagram for illustrating a display device that provides different contents to a partial area and a remaining area in an entire area according to an embodiment of the disclosure;
FIG. 13 is a diagram for illustrating a display device that displays a content received from a first external device and a content received from a second external device according to an embodiment of the disclosure;
FIG. 14 is a diagram for illustrating a display device that controls a reflectance based on a context of a user, and provides at least one of a widget or a notification according to an embodiment of the disclosure; and
FIG. 15 is a flow chart for illustrating a method for controlling a display device according to an embodiment of the disclosure.

### [Mode for Invention]

Hereinafter, the disclosure will be described in detail with reference to the accompanying drawings.

As terms used in the embodiments of the disclosure, general terms that are currently used widely were selected as far as possible, in consideration of the functions described in the disclosure. However, the terms may vary depending on the intention of those skilled in the art who work in the pertinent field or previous court decisions, or emergence of new technologies, etc. Also, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or" B" or "A and B."

Further, the expressions "first," "second," and the like used in this specification may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, singular expressions include plural expressions, unless defined obviously differently in the context. In addition, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Further, in the disclosure, "a module" or "a part" may perform at least one function or operation, and may be implemented as hardware or software, or as a combination of hardware and software. In addition, a plurality of "modules" or "parts" may be integrated into at least one module and implemented as at least one processor (not shown), excluding "a module" or "a part" that needs to be implemented as specific hardware.

Also, in this specification, the term "a user" may refer to a person who uses an electronic apparatus or an apparatus using an electronic apparatus (e.g.: an artificial intelligence electronic apparatus).

Hereinafter, an embodiment of the disclosure will be described in more detail with reference to the accompanying drawings.

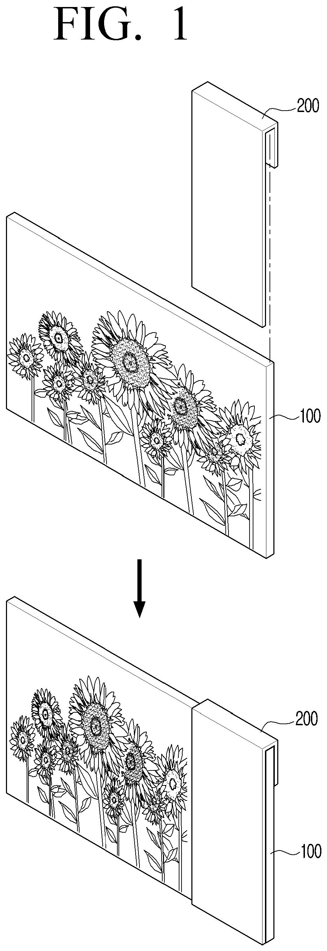

FIG. 1 is a diagram for illustrating a display device and a switchable mirror according to an embodiment of the disclosure.

According to an embodiment of the disclosure, a switchable mirror 200 may be attached to the display device 100.

According to an embodiment, if the switchable mirror 200 is attached to the display device 100, the display device 100 may operate as mirror display devices of various types that can transmit information while providing a mirror function.

Here, a mirror display is a compound word of 'a mirror' which means a mirror, and 'a display' which means a task of visually expressing information.

According to an embodiment, the display device 100 may be implemented as a TV, but is obviously not limited thereto. For example, as the display device 100, any device equipped with a display function such as a video wall, a large format display (LFD), digital signage, a digital information display (DID), a projector display, etc. can be applied without limitation.

According to an embodiment, the switchable mirror 200 may be implemented in various forms that can be attached to the display device 100. For example, the switchable mirror 200 may be implemented in a form of a hook or a gaff that can be hung on the display device 100 as illustrated in FIG. 1.

However, this is just an example for the convenience of explanation, and the switchable mirror 200 is obviously not limited thereto. For example, it is obvious that the switchable mirror 200 can be attached to the display device 100 by magnetism, or the switchable mirror 200 can be attached to the display device 100 through a connecting link (or, a clip, a screw and a bolt, etc.) provided on each of the switchable mirror 200 and the display device 100.

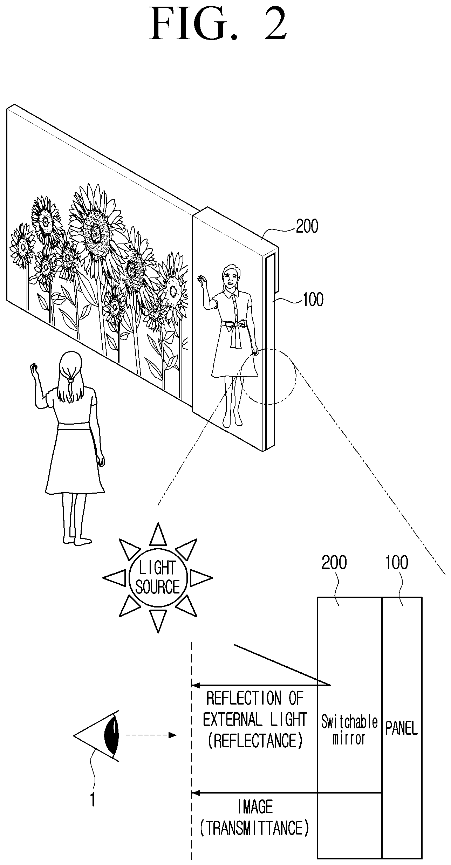

FIG. 2 is a diagram for illustrating a display device to which a switchable mirror is attached according to an embodiment of the disclosure.

Referring to FIG. 2, the switchable mirror 200 may include a mirror layer.

According to an embodiment, a display panel included in the display device 100 may provide a display function.

According to an embodiment, a display panel may include a display including self-luminous elements, or non-self-luminous elements and a backlight. For example, the display panel may be implemented as various forms of displays such as a liquid crystal display (LCD), an organic light emitting diodes (OLED) display, light emitting diodes (LED), micro LED, mini LED, a plasma display panel (PDP), a quantum dot (QD) display, quantum dot light emitting diodes (QLED), etc.

For example, the switchable mirror 200 may include a mirror layer which is arranged on the front surface of the display panel provided on the display device 100 when the switchable mirror 200 is attached to the display device 100, and whose reflectance can be controlled (or, adjusted). For example, if the switchable mirror 200 is attached to the display device 100, the mirror layer may be located to be adjacent to the front surface of the display panel.

According to an embodiment, the mirror layer included in the switchable mirror 200 may be implemented as a glass plate or a transparent plastic plate on which a metallic thin film or a dielectric multilayer that reflects a part of incident light quantity, and makes another part pass through is deposited, and provide a mirror function.

For example, if the reflectance of the mirror layer is the maximum reflectance, the mirror layer reflects the entire incident light quantity, and does not make a content displayed by the display panel of the display device 100 pass through, and thus a partial area overlapping the switchable mirror (or, a partial area covered by the switchable mirror) in the entire area of the display panel provides only a mirror function, and cannot provide a display function.

For example, if the reflectance of the mirror layer is the minimum reflectance, the mirror layer makes the entire incident light quantity pass through, and makes a content displayed by the display panel of the display device 100 pass through, and thus a partial area of the display panel cannot provide a mirror function, but can provide only a display function.

For example, if the reflectance of the mirror layer is between the minimum reflectance and the maximum reflectance, the mirror layer reflects a part of incident light quantity, and makes a content displayed by the display panel of the display device 100 pass through, and thus a partial area of the display panel can provide both of a mirror function and a display function.

According to an embodiment, the switchable mirror 200 may operate as an independent device that provides a mirror function if it is detached from the display device 100.

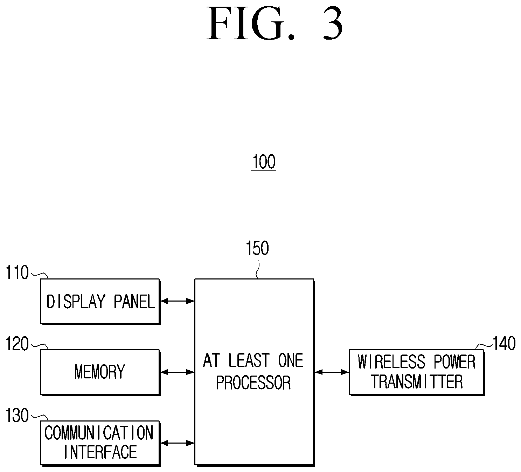

FIG. 3 is a block diagram illustrating a configuration of a display device according to an embodiment of the disclosure.

Referring to FIG. 3, the display device 100 includes a display panel 110, memory 120, a communication interface 130, a wireless power transmitter 140, and at least one processor 150. Meanwhile, overlapping explanation will be omitted.

The memory 120 according to an embodiment of the disclosure may store data necessary for various embodiments of the disclosure.

The memory 120 may be implemented in the form of memory embedded in the display device 100, or in the form of memory that can be attached to or detached from the display device 100 according to the use of stored data. For example, in the case of data for driving the display device 100, the data may be stored in memory embedded in the display device 100, and in the case of data for an extended function of the display device 100, the data may be stored in memory that can be attached to and detached from the display device 100. Meanwhile, in the case of memory embedded in the display device 100, the memory may be implemented as at least one of volatile memory (e.g.: dynamic RAM (DRAM), static RAM (SRAM), or synchronous dynamic RAM (SDRAM), etc.) or non-volatile memory (e.g.: one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD)). Also, in the case of memory that can be attached to and detached from the display device 100, the memory may be implemented in forms such as a memory card (e.g., compact flash (CF), secure digital (SD), micro secure digital (Micro-SD), mini secure digital (Mini-SD), extreme digital (xD), a multi-media card (MMC), etc.) and external memory that can be connected to a USB port (e.g., a USB memory), etc.

According to an embodiment, the memory 120 may store at least one instruction for controlling the display device 100 or a computer program including instructions.

According to an embodiment, the memory 120 may store a content received from an external device (e.g., a source device), an external storage medium (e.g., a USB), an external server (e.g., a webhard), etc. Alternatively, if an image obtained through a camera provided on the switchable mirror 200 is received from the switchable mirror 200, the memory 120 may store the received image.

According to an embodiment, the memory 120 may store various types of information necessary for image quality processing, e.g., information, an algorithm (e.g., a neural network model), an image quality parameter, etc. for performing at least one of noise reduction, detail enhancement, tone mapping, contrast enhancement, color enhancement, or frame rate conversion.

According to an embodiment of the disclosure, the memory 120 may store various types of information, an algorithm (e.g., a neural network model), a size (or, resolution) parameter, etc. necessary for conversion of a content (e.g., resizing of a content, adjustment of a resolution of a content (e.g., up scaling, down scaling, etc.)).

According to an embodiment, the memory 120 may be implemented as single memory that stores data generated in various operations according to the disclosure. However, according to another embodiment, the memory 120 may also be implemented to include a plurality of memories that store each of different types of data, or store each of data generated in different steps.

Also, the memory 120 may store various types of data, programs, or applications for driving/controlling the display device 100. Other than the above, the memory 120 may include a user sensing module, a communication control module, a voice recognition module, a motion recognition module, a light receiving module, a display control module, an audio control module, an external input control module, a power control module, a voice database (DB), or a motion data base (DB).

In the aforementioned embodiment, it was explained that various types of data are stored in external memory of the at least one processor 150, but at least some of the aforementioned data can obviously be stored in internal memory of the at least one processor 150.

The communication interface 130 may include a wired or wireless input/output interface (or, an input/output terminal) according to various standards.

For example, the communication interface 130 may include various communication interfaces such as a high definition multimedia interface (HDMI), a mobile high-definition link (MHL), a universal serial bus (USB), a display port (DP), a Thunderbolt, a video graphics array (VGA) port, an RGB port, a D-subminiature (D-SUB), a digital visual interface (DVI), etc. based on a wire.

However, the communication interface 130 is not limited thereto, and the communication interface 130 may include various interfaces such as AP-based Wi-Fi (Wi-Fi, a wireless LAN network), Bluetooth, Zigbee, a wired/wireless local area network (LAN), a wide area network (WAN), Ethernet, Wi-Fi Direct (WFD), infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig), RF communication, Radio-Frequency Identification (RFID), IEEE 1394, Audio Engineering Society/European Broadcasting Union (AES/EBU), Optical, and coaxial, etc.

According to an embodiment, it is obvious that the communication interface 130 can communicate with the switchable mirror 200 attached to the display device 100, and can also communicate with various types of external devices that provide contents.

For example, the communication interface 130 may communicate with the switchable mirror 200 through coupling between a port included in the communication interface 130 (e.g., wired connecting ports in various forms) and a port provided on the switchable mirror 200 as the switchable mirror 200 is attached to the display device 100.

However, the disclosure is not limited thereto, and the communication interface 130 can obviously communicate with the switchable mirror 200 wirelessly. For example, the display device 100 may communicate with the switchable mirror 200 according to various types of wireless communication standards such as Wi-Fi, Bluetooth, Wi-Fi Direct (WFD), infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig), RF communication, Radio-Frequency Identification (RFID), etc.

Also, if attachment of the switchable mirror 200 is identified through a plurality of sensors as will be described below, the at least one processor 150 may transmit a control signal for controlling a reflectance through communication according to various types of wired/wireless standards, or receive an image obtained through the camera provided on the switchable mirror 200.

For example, if wireless communication with the switchable mirror 200 is performed, the at least one processor 150 may not perform synchronization before attachment of the switchable mirror 200 is identified, but perform synchronization through wireless communication if attachment of the switchable mirror 200 is identified, and transmit a control signal to the switchable mirror 200, or receive an image from the switchable mirror 200.

According to an embodiment, the display device 100 may include a wireless power transmitter 140 that transmits wireless power. According to an embodiment, the wireless power transmitter 140 may include an EMI filter, a PFC circuit, an inverter, and a transmitter coil, etc.

The EMI filter rectifies or smooths input commercial power, and outputs it as a direct current voltage of a specific level. For rectification, a half-wave or a full-wave rectifier circuit may be used, and for smoothing, a capacitor may be connected to an output end of the rectifier circuit in parallel.

The power factor correction (PFC) circuit may reduce a phase difference between a direct current voltage that was input by passing through the EMI filter and a direct current. Accordingly, the PFC circuit can improve power efficiency by offsetting reactive power. The inverter converts the direct current that was output from the PFC circuit while its power factor was compensated into an alternating current, and makes it usable by a transmitter coil (a Tx coil). Accordingly, the transmitter coil may transmit electromagnetic energy to the wireless power receiver.

According to an embodiment, if the wireless power receiver is identified, the at least one processor 150 may control the wireless power transmitter 140 to transmit wireless power.

The at least one processor 150 controls the overall operations of the display device 100. Specifically, the at least one processor 150 may be connected to each component of the display device 100, and control the overall operations of the display device 100.

The at least one processor 150 may control operations of the display device 100 according to various embodiments by executing the at least one instruction stored in the memory 120.

The at least one processor 150 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 150 may control one or a random combination of the other components of the electronic apparatus, and perform an operation related to communication or data processing. Also, the at least one processor 150 may execute one or more programs or instructions stored in the memory 120. For example, the at least one processor 150 may perform the method according to one or more embodiments of the disclosure by executing the one or more instructions stored in the memory 120.

In case the method according to one or more embodiments of the disclosure includes a plurality of operations, the plurality of operations may be performed by one processor, or performed by a plurality of processors. For example, when a first operation, a second operation, and a third operation are performed by the method according to one or more embodiments, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 150 may be implemented as a single core processor including one core, or it may be implemented as one or more multicore processors including a plurality of cores (e.g., multicores of the same kind or multicores of different kinds). In case the at least one processor 150 is implemented as multicore processors, each of the plurality of cores included in the multicore processors may include internal memory of the processor such as cache memory, on-chip memory, etc., and a common cache shared by the plurality of cores may be included in the multicore processors. Also, each of the plurality of cores (or some of the plurality of cores) included in the multicore processors may independently read a program instruction for implementing the method according to one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores included in the multicore processors, or they may be performed by the plurality of cores. For example, when the first operation, the second operation, and the third operation are performed by the method according to one or more embodiments, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

In particular, the at least one processor 150 according to an embodiment of the disclosure may control the display panel 110 to display a content, and when the switchable mirror 200 is attached, the at least one processor 150 may control (or, adjust, change, etc.) the reflectance of the mirror layer 210 of the switchable mirror 200.

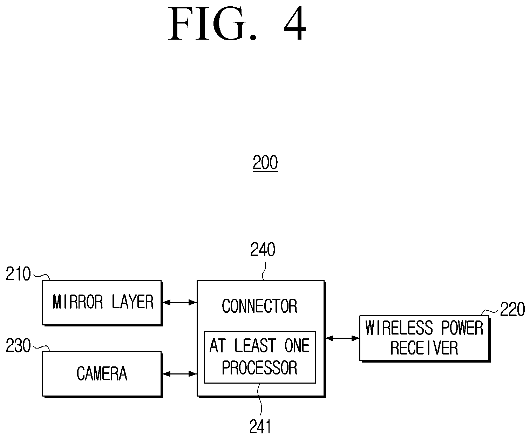

FIG. 4 is a block diagram illustrating a configuration of a switchable mirror according to an embodiment of the disclosure.

Referring to FIG. 4, the switchable mirror 200 may include a mirror layer 210, a wireless power receiver 220, a camera 230, and a connector 240.

According to an embodiment, the switchable mirror 200 may include a mirror layer 210 which is arranged on the front surface of the display panel 110 when attached to the display device 100, and whose reflectance is controllable.

According to an embodiment, the mirror layer 210 may control the reflectance according to a control signal received from at least one of the at least one processor 150 provided on the display device 100 or at least one processor 241 provided on the connector 240 of the switchable mirror 200.

In the disclosure, explanation regarding the at least one processor 241 provided on the connector 240 is identical to the explanation regarding the at least one processor 150 provided on the display device 100, and thus it will be omitted.

According to an embodiment, if the reflectance of the mirror layer 210 is adjusted to the maximum reflectance, the mirror layer 210 may operate in a mirror state wherein it provides a mirror image corresponding to an object located on the front side of the switchable mirror 200.

According to an embodiment, if the reflectance of the mirror layer 210 is adjusted to the minimum reflectance, the mirror layer 210 may operate in a clear state (or, a glass state) wherein it makes the entire incident light quantity pass through, and makes the entire light output by the display panel 110 to provide a content pass through.

According to an embodiment, on the front surface of the mirror layer 210, a touch sensor that has forms such as a touch film, a touch sheet, a touch pad, etc. and detects a touch operation may be arranged and implemented to detect various types of touch inputs. For example, the mirror layer 210 may detect various types of touch inputs such as a touch input by a user's hand, a touch input by an input device such as a stylus pen, a touch input by a specific electrostatic material, etc. Here, the input device may be implemented as an input device in a pen type that can be referred to as various terms such as an electronic pen, a stylus pen, an S-pen, etc.

According to an embodiment, the mirror layer 210 may control the switchable mirror 200 by transmitting a detected touch input to the at least one processor 241 provided on the switchable mirror 200, and may control the display device 100 by transmitting a detected touch input to the at least one processor 150 provided on the display device 100.

According to an embodiment, the switchable mirror 200 may include a wireless power receiver 220.

The wireless power receiver 220 may include a receiving coil (an Rx coil).

According to an embodiment, induced electromotive force may be generated by a voltage applied to the transmitter coil of the wireless power transmitter 140 or a current flowing in the transmitter coil. Here, the induced electromotive force has a unit of a voltage. The receiving coil of the wireless power receiver 220 receives electromagnetic energy from the transmitter coil. As an example, the receiving coil may receive power through magnetic coupling with the transmitter coil.

Then, a rectifier provided on the wireless power receiver 220 may rectify the power received through the receiving coil. For example, the rectifier may rectify an alternating current received through the receiving coil and generate a direct current. The rectifier may rectify and smooth an alternating current voltage received through the receiving coil and convert it into a direct current voltage. Then, the switchable mirror 200 may be driven by using the power rectified through the wireless power receiver 220.

However, the disclosure is not limited thereto, and the switchable mirror 200 can obviously be connected to the display device 100 via wire and receive wired power.

According to an embodiment, the switchable mirror 200 may detect the ambient environment of the switchable mirror 200 (e.g., an object located on the front side of the switchable mirror 200) through the camera 230 arranged in one area of the mirror layer 210.

In the embodiments of the disclosure, a case wherein the switchable mirror 200 includes the camera 230 was assumed for the convenience of explanation. However, the disclosure is not limited thereto, and the display device 100 can obviously include a camera.

According to an embodiment, the camera 230 may obtain an image by capturing an object located on the front side of the switchable mirror 200.

According to an embodiment of the disclosure, the camera 230 may convert the captured image into an electric signal, and generate image data based on the converted signal. For example, the camera 230 may convert a subject (e.g., an object located on the front side of the switchable mirror 200) into an electric image signal through a semiconductor optical element (a charge coupled device (CCD)), and amplify the converted image signal and convert it into a digital signal, and then perform signal processing. For example, the camera 230 may include at least one of a general (or, basic) camera, an RGB camera, or a super wide angle camera.

However, the disclosure is not limited thereto, and the camera 230 may also be implemented as a time-of-flight (ToF) sensor, a LiDAR sensor, a radar sensor, an ultrasonic sensor, an infrared sensor, etc.

The camera 230 according to an embodiment may capture a still image on a specific time point, or capture still images continuously (or, in real time).

According to an embodiment, the at least one processor 241 provided on the switchable mirror 200 or the at least one processor 150 provided on the display device 100 may identify a context located on the front side of the switchable mirror 200 based on an image obtained through the camera 230. For example, the at least one processor 150 may identify a context of the user located on the front side of the switchable mirror 200.

For example, if the user is located to be adjacent to the switchable mirror 200 (or, is approaching toward the switchable mirror 200), the at least one processor 150 may increase the reflectance of the mirror layer 210 for providing a mirror image corresponding to the user.

For example, if a movement of the user is identified (e.g., if the user is exercising), the at least one processor 150 may increase the reflectance of the mirror layer 210 for providing a mirror image corresponding to the user.

For example, if the user becomes far from the switchable mirror 200, the at least one processor 150 may decrease the reflectance of the mirror layer 210 for providing a content through the entire area of the display panel 110.

Detailed explanation in this regard will be described later.

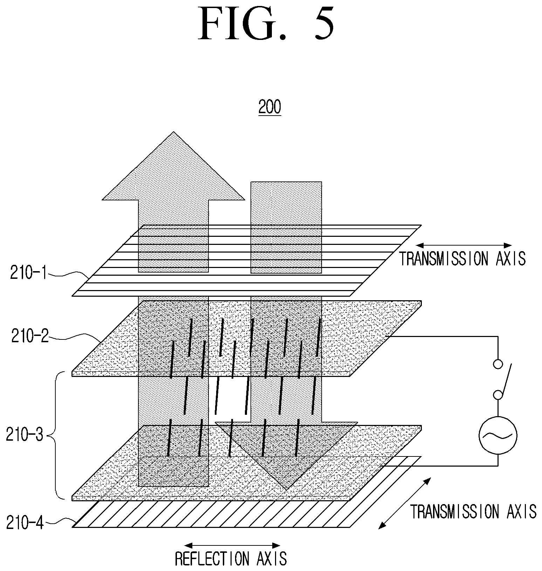

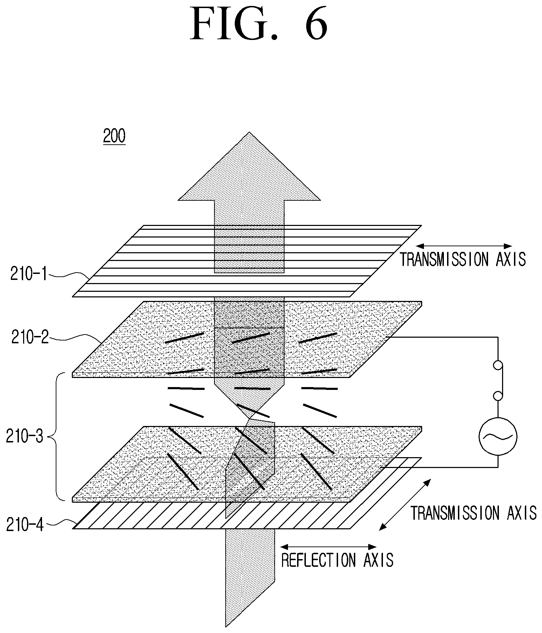

FIG. 5 and FIG. 6 are diagrams for illustrating a configuration of a switchable mirror according to an embodiment of the disclosure.

The mirror layer 210 according to an embodiment of the disclosure may include a polarizer, upper glass, lower glass, and a reflective polarizer.

According to an embodiment, a liquid crystal (LC) layer may be formed between the upper glass and the lower glass. The liquid crystal (LC) is in an intermediate state between liquid and a crystal, and may thus have a structure wherein rod-shaped molecules (liquid crystal molecules) are aligned in one direction similarly to a solid crystal.

According to an embodiment, the polarizer may be implemented to make polarized light pass through. Also, according to an embodiment, the upper glass and the lower glass may be implemented as transparent conductive oxide (TCO) glass, but are not limited thereto.

FIG. 5 illustrates the mirror layer 210 when the voltage is turned off, and when the voltage is turned off, liquid crystal molecules may maintain a vertical state, and incident polarized light may pass through the liquid crystal (LC) layer 210-3 as it is, and may be reflected to the reflection axis of the reflective polarizer 210-4. Accordingly, the mirror layer 210 may be maintained in a mirror state.

For example, when electricity is not applied, incident polarized light is reflected to the reflection axis of the reflective polarizer, and thus the mirror function (referred to as a mirror state hereinafter) of the mirror layer 210 can be provided, and as illustrated in FIG. 6, when electricity is applied, incident polarized light rotates by 90 degrees and passes through the reflection axis of the reflective polarizer 210-4, and thus the mirror state (e.g., a clear state) of the mirror layer 210 can be maintained.

Other than the above, depending on implementation examples, the mirror layer 210 may further include a protection film that performs a role of protecting the polarizer, a film that performs a role of classifying light on the polarizer, etc.

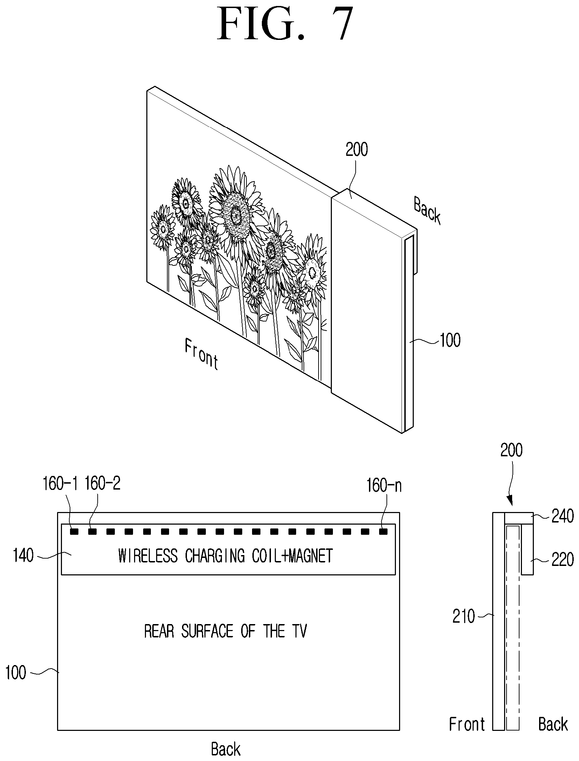

FIG. 7 is a diagram for illustrating a display device that transmits wireless power to a switchable mirror according to an embodiment of the disclosure.

Referring to FIG. 7, the wireless power transmitter 140 may be provided on the rear surface of the display device 100, and if attachment of the switchable mirror 200 is identified (or, if the wireless power receiver 220 is located to be adjacent), the at least one processor 150 may control the wireless power transmitter 140 to transmit wireless power. As the configurations of the wireless power transmitter 140 and the wireless power receiver 220 were described above, overlapping explanation will be omitted.

According to an embodiment, the display device 100 may include a plurality of sensors 160-1, ..., 160-n, and the plurality of sensors 160-1, ..., 160-n may be provided on the rear surface of the display device 100 and detect the switchable mirror 200.

For example, the at least one processor 150 may identify whether the switchable mirror 200 is attached, and the area wherein the switchable mirror 200 is attached (e.g., a partial area covered by the switchable mirror 200 in the entire area of the display panel 110, or a partial area overlapping the switchable mirror 200 in the entire area of the display panel 110) based on data obtained through the plurality of sensors 160-1, ..., 160-n.

According to an embodiment, each of the plurality of sensors 160-1, ..., 160-n may include a magnetic sensor. If magnetism is detected through some magnetic sensors among the plurality of magnetic sensors, the at least one processor 150 may identify attachment of the switchable mirror 200. According to an embodiment, the at least one processor 150 may identify a partial area overlapping the switchable mirror 200 (or, a partial area covered by the switchable mirror 200) in the entire area of the display panel 110 based on the locations of some magnetic sensors wherein magnetism was detected.

For example, if magnetism is detected from the first sensor 160-1 to the fourth sensor 160-4 among the plurality of sensors 160-1, ..., 160-n, the at least one processor 150 may identify the areas corresponding to the first sensor 160-1 to the fourth sensor 160-4 in the entire area of the display panel 110 as a partial area overlapping the switchable mirror 200 (or, a partial area covered by the switchable mirror 200, or a partial area wherein the switchable mirror 200 is overlapped, etc.).

According to an embodiment, each of the plurality of sensors 160-1, ..., 160-n may include an illumination sensor. If drastic decrease of an illumination value is detected through some illumination sensors among the plurality of illumination sensors, the at least one processor 150 may identify attachment of the switchable mirror 200. According to an embodiment, the at least one processor 150 may identify a partial area overlapping the switchable mirror 200 (or, a partial area covered by the switchable mirror 200) in the entire area of the display panel 110 based on the locations of some illumination sensors wherein drastic decrease of an illumination value was detected.

For example, if drastic decrease of an illumination value is detected through the first sensor 160-1 to the fourth sensor 160-4 among the plurality of sensors 160-1, ..., 160-n, the at least one processor 150 may identify the areas corresponding to the first sensor 160-1 to the fourth sensor 160-4 in the entire area of the display panel 110 as a partial area overlapping the switchable mirror 200.

However, the disclosure is not limited thereto, and each of the plurality of sensors 160-1, ..., 160-n may include various types of proximity sensors. For example, each of the plurality of sensors 160-1, ..., 160-n may include a radio-frequency identification (RFID) sensor (e.g., an RFID reader). For example, if an RFID tag provided on the switchable mirror 200 (or, the wireless power receiver 220 of the switchable mirror 200) is detected through the first sensor 160-1 to the fourth sensor 160-4 among the plurality of sensors 160-1, ..., 160-n, the at least one processor 150 may identify the areas corresponding to the first sensor 160-1 to the fourth sensor 160-4 in the entire area of the display panel 110 as a partial area overlapping the switchable mirror 200.

However, the disclosure is not limited thereto, and the plurality of sensors 160-1, ..., 160-n can obviously be provided on the front surface of the display device 100 and detect the switchable mirror 200.

Referring to the side view of the switchable mirror 200 illustrated in FIG. 7, the switchable mirror 200 may include a mirror layer 210 that is arranged to be adjacent to the front surface of the display panel 110 when attached to the display panel 110, and a wireless power receiver 220 that is arranged to be adjacent to the rear surface of the display panel 110 when attached to the display panel 110.

According to an embodiment, the switchable mirror 200 may include a connector 240 which connects the mirror layer 210 and the wireless power receiver 220, and whose length can be adjusted manually or automatically to correspond to the thickness of the display panel 110.

According to an embodiment, the connector 240 may include a control circuit wherein the at least one processor 241 for controlling the switchable mirror 200 is provided.

For example, the connector 240 may include a screw, and adjust the length of the connector 240 to correspond to the thickness of the display panel 110 by rotating the screw.

However, the disclosure is not limited thereto, and the connector 240 may include a sliding rail (or, a sliding guide), and adjust the distance between the mirror layer 210 and the wireless power receiver 220 (i.e., the length of the connector 240) to correspond to the thickness of the display panel 110.

For example, the connector 240 may include a motor, and adjust the length of the connector 240 to correspond to the thickness of the display panel 110 by adjusting the location of at least one of the mirror layer 210 or the wireless power receiver 220 forward/backward by driving the motor.

For example, the connector 240 can obviously include a joint whose length can be adjusted, a piston (or, a cylinder) whose length can be adjusted by using fluid or air, etc.

According to an embodiment, if attachment of the switchable mirror 200 is identified (or, if the wireless power receiver 220 of the switchable mirror 200 is detected), the at least one processor 150 may control the wireless power transmitter 140 to transmit wireless power. According to an embodiment, in order for the wireless power receiver 220 to receive wireless power, the distance between the wireless power transmitter 140 and the wireless power receiver 220 should be within a threshold distance, and thus the at least one processor 150 may control the connector 240 such that the distance between the wireless power transmitter 140 and the wireless power receiver 220 becomes shorter than or equal to the threshold distance.

For example, if attachment of the switchable mirror 200 is identified, but the wireless power receiver 220 is not detected, the at least one processor 150 may control the connector 240 such that the wireless power receiver 220 is located to be adjacent to the wireless power transmitter 140.

For example, if the wireless power transmitter 140 transmits wireless power, but the wireless power receiver 220 cannot receive the wireless power, the at least one processor 150 may control the connector 240 such that the wireless power receiver 220 is located to be adjacent to the wireless power transmitter 140.

According to an embodiment of the disclosure, in a process wherein the switchable mirror 200 is attached to the display device 100, or a process wherein the switchable mirror 200 is detached from the display device 100, for preventing generation of a problem such as breakdown of elements (components) provided on each of the display device 100 and the switchable mirror 200 due to friction, contact, or physical collision between the display device 100 and the switchable mirror 200, the surface of the mirror layer 210 of the switchable mirror 200 that contacts the display panel 110 may include a transparent protection film for protecting from scratching and fine damage, and for absorbing impact. Also, the surfaces of the wireless power receiver 220 and the connector 240 of the switchable mirror 200 that contact the display device 100 may also include a protection film.

According to an embodiment, the surface of the mirror layer 210 that contacts the display panel 110 may include a transparent protection film for making light output by the display panel 110 to provide a content pass through, and the surfaces of the wireless power receiver 220 and the connector 240 of the switchable mirror 200 that contact the display device 100 may include a transparent protection film or an opaque protection film (or, various types of physical buffers).

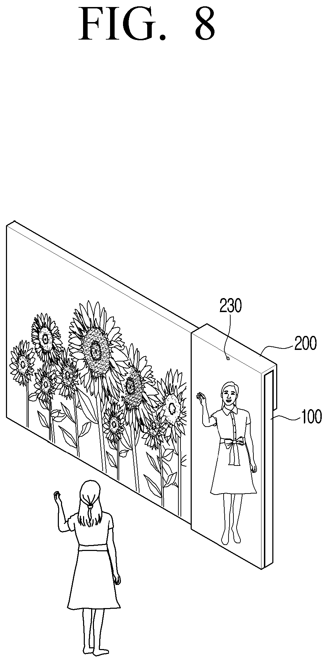

FIG. 8 is a diagram for illustrating a switchable mirror whose reflectance was adjusted according to an embodiment of the disclosure.

Referring to FIG. 1 and FIG. 8, the at least one processor 150 may control the display panel 110 to display a content over the entire area of the display panel 110.

According to an embodiment, if the switchable mirror 200 is attached to the front surface of the display panel 110, the at least one processor 150 may identify a partial area overlapping the switchable mirror 200 in the entire area of the display panel 110.

According to an embodiment, for displaying a content in the remaining area excluding the partial area in the entire area, the at least one processor 150 may convert the content (e.g., resizing of the content, adjustment of the resolution of the content (e.g., up scaling, down scaling, etc.)) based on the size of the remaining area.

According to an embodiment, the at least one processor 150 may control the display panel 110 to display the converted content in the remaining area.

According to an embodiment, the at least one processor 150 may increase the reflectance of the mirror layer 210 of the switchable mirror 200 for providing a mirror image of the user located on the front side of the switchable mirror 200 in the partial area overlapping the switchable mirror 200 in the entire area of the display panel 110.

Referring to FIG. 8, if the switchable mirror 200 is attached to the display device 100, the at least one processor 150 may operate the partial area overlapping the switchable mirror 200 in a mirror state by adjusting the reflectance of the mirror layer 210 to the maximum reflectance.

Meanwhile, in the disclosure, a case wherein the vertical length of the switchable mirror 200 is greater than or equal to the vertical length of the display device 100 was assumed, for the convenience of explanation, but the disclosure is obviously not limited thereto.

For example, if the switchable mirror 200 is attached, the at least one processor 150 may identify a vertical area including the partial area overlapping the switchable mirror 200. For example, the at least one processor 150 may identify a vertical area that includes the partial area overlapping the switchable mirror 200, and that has identical width to the horizontal width of the partial area. Then, for displaying a content in the remaining area excluding the vertical area, the at least one processor 150 may convert the content to correspond to the size of the remaining area.

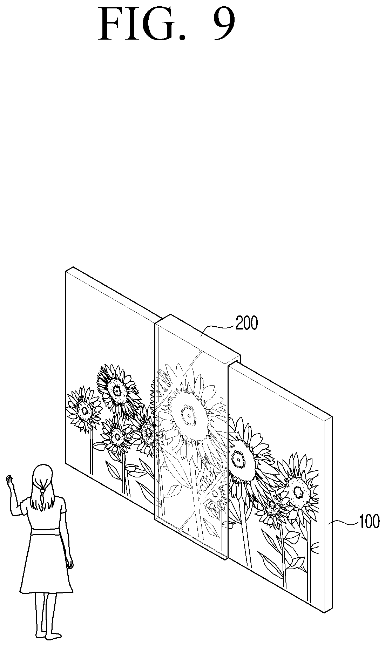

FIG. 9 is a diagram for illustrating a display device that displays a content over an entire area according to an embodiment of the disclosure.

Referring to FIG. 9, according to an embodiment, even if the switchable mirror 200 is attached, the at least one processor 150 may adjust the reflectance of the mirror layer 210 to the minimum reflectance for displaying a content through the entire area of the display panel 110.

For example, if a genre of a content is a predetermined genre (e.g., a movie, a concert, etc.), or an external device providing a content is a predetermined device (e.g., an external streaming server (an OTT server), a console game device, etc.) based on metadata of the content, the at least one processor 150 may not convert the size of the content even if attachment of the switchable mirror 200 is identified, and display the content through the entire area of the display panel 110.

According to an embodiment, for minimizing the inconvenience of the user who watches the content due to attachment of the switchable mirror 200, the at least one processor 150 may operate the mirror layer 210 in a clear state (or, a glass state) by adjusting the reflectance of the mirror layer 210 to the minimum reflectance, and display the content through the entire area of the display panel 110.

According to an embodiment, the at least one processor 150 may relatively increase the brightness of the backlight or self-luminous elements corresponding to the partial area overlapping the switchable mirror 200 more than the brightness of the backlight or the self-luminous elements corresponding to the remaining area.

According to an embodiment, the at least one processor 150 may relatively increase the brightness of the partial area overlapping the switchable mirror 200 more than the brightness of the remaining area for complementing reduction of brightness due to the transmittance of the mirror layer 210.

However, this is just an example for the convenience of explanation, and the at least one processor 150 may control the reflectance of the mirror layer 210 according to a user input (e.g., a user input through a remote control device, or a user input through a voice command of the user, etc.), and display a content through the entire area of the display panel 110 when the switchable mirror 200 is attached.

For example, the at least one processor 150 may adjust the reflectance of the mirror layer 210 to lower than the maximum reflectance according to a user input, and display a content through the entire area of the display panel 110, and the partial area overlapping the switchable mirror 200 may provide both of the content and a mirror image.

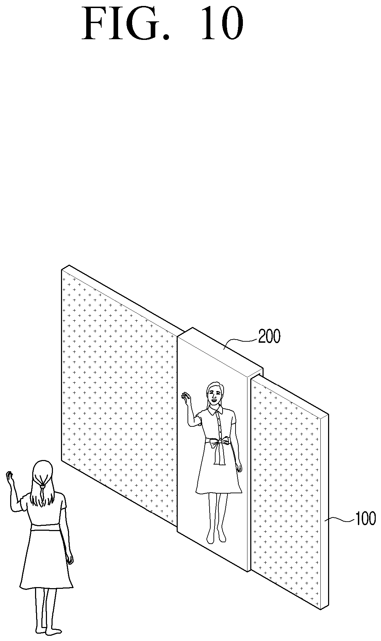

FIG. 10 is a diagram for illustrating a display device that provides a mirror image to a partial area by using a switchable mirror according to an embodiment of the disclosure.

Referring to FIG. 10, the at least one processor 150 may control the switchable mirror 200 and the display panel 110 such that only a mirror image is provided through the partial area overlapping the switchable mirror 200 in the entire area of the display panel 110, and the remaining area does not provide a content.

According to an embodiment, the at least one processor 150 may adjust the reflectance of the mirror layer 210 to the maximum reflectance, and may not display a content in an area not covered by the switchable mirror 200 (or, an area not overlapping the switchable mirror 200) (i.e., the remaining area), and for increasing power efficiency, turn off the backlight or the self-luminous elements corresponding to the remaining area.

For example, if the display panel 110 includes non-self-luminous elements and a backlight, the at least one processor 150 may turn off the backlight corresponding to the remaining area excluding the partial area overlapping the switchable mirror 200 in the entire area of the display panel 110.

For example, if the display panel 110 includes self-luminous elements, the at least one processor 150 may turn off the backlight corresponding to the remaining area excluding the partial area overlapping the switchable mirror 200 in the entire area of the display panel 110.

However, the disclosure is not limited thereto, and the at least one processor 150 may adjust the reflectance of the mirror layer 210 to between the minimum reflectance and the maximum reflectance for providing both of a mirror image and a sub content in the area overlapping the switchable mirror 200, and control the display panel 110 to display the sub content in the area overlapping the switchable mirror 200.

Here, the sub content may include sub contents such as a user interface (UI) smaller than a predetermined size, a notification, etc. for providing widget information (e.g., weather information, schedule information, traffic information, stock (or, exchange rate) information, etc.) different from a content displayed by the display panel 110 before the switchable mirror 200 is attached to the display device 100.

According to an embodiment, the display device 100 may receive data corresponding to the sub content (e.g., at least one of a widget or a notification) from the external device, and control the display panel 110 to display the sub content based on the received data. However, the disclosure is not limited thereto, and the display device 100 may store a sub content, and control the display panel 110 to display the stored sub content.

However, the disclosure is not limited thereto, and a sub content may correspond to an object located on the front side of the switchable mirror 200, and may include a virtual object that was adjusted (aligned) to a mirror image provided by the mirror layer 210.

For example, if an object located on the front side of the switchable mirror 200 is captured through the camera 230 included in the switchable mirror 200 and an image is obtained, the at least one processor 150 may display a virtual object arranged to contact (or, touch) a mirror image provided by the mirror layer 210 in the area overlapping the switchable mirror 200 based on the object included in the obtained image.

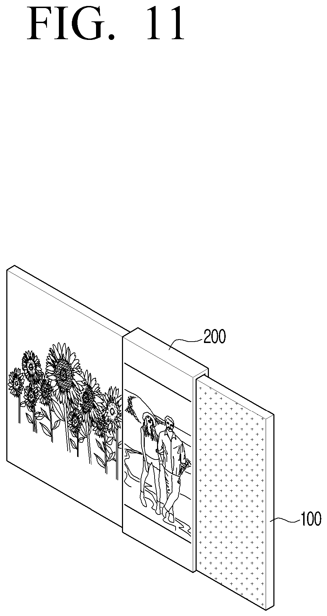

FIG. 11 is a diagram for illustrating a display device that provides a converted content and a mirror image according to an embodiment of the disclosure.

Referring to FIG. 11, if the switchable mirror 200 is attached, the at least one processor 150 may identify the remaining area excluding the partial area overlapping the switchable mirror 200 in the entire area of the display panel 110.

According to an embodiment, if the remaining area is divided into a plurality of sub areas, the at least one processor 150 may convert a content to correspond to the size of a first sub area of a relatively big size among the plurality of sub areas, and display the content in the first sub area.

For example, as illustrated in FIG. 11, if the remaining area is divided into a first sub area and a second sub area due to the partial area overlapping the switchable mirror 200, the at least one processor 150 may display the content in the first sub area of a relatively bigger size between the first sub area and the second sub area.

Meanwhile, only an embodiment wherein the at least one processor 150 converts a content based on the size of the remaining area and then displays the content was described, but the disclosure is not limited thereto, and the at least one processor 150 can obviously downscale (or upscale) a content based on the resolution of the remaining area, and then display the content.

In FIG. 11, according to an embodiment, the at least one processor 150 may not display a content in the second sub area of a relatively small size among the plurality of sub areas, but the disclosure is obviously not limited thereto.

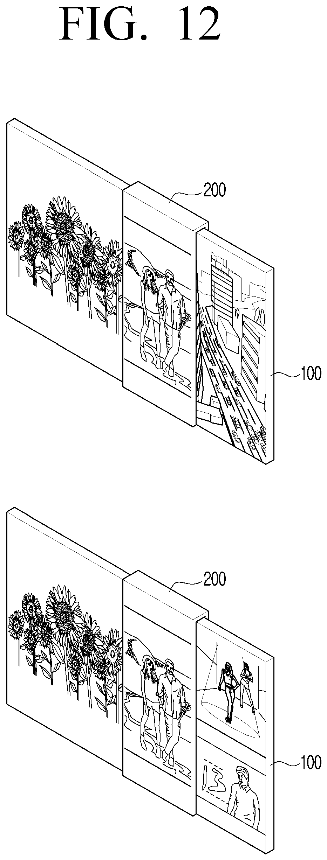

FIG. 12 is a diagram for illustrating a display device that provides different contents to a partial area and a remaining area in an entire area according to an embodiment of the disclosure.

Referring to FIG. 12, the at least one processor 150 may display a content different from a content to be displayed in the first sub area in the second sub area of a relatively small size among the plurality of sub areas.

For example, the at least one processor 150 may display a content through the display panel 110, and if the remaining area excluding the partial area overlapping the switchable mirror 200 is divided into a plurality of sub areas, the at least one processor 150 may display different contents in each of the plurality of sub areas.

For example, the at least one processor 150 may continuously display a content in the first sub area of a relatively big size among the plurality of sub areas, and display a different content in the second sub area of a relatively small size.

For example, if the display device 100 receives contents from each of a first external device and a second external device, the at least one processor 150 may display a content received from the first external device in the first sub area, and display a content received from the second external device in the second sub area.

As another example, the at least one processor 150 may identify a context of the user through the camera 230 included in the switchable mirror 200, and display a content corresponding to the identified context in the second sub area of a relatively small size among the plurality of sub areas.

For example, if a context of the user is identified as 'exercise' based on an image obtained through the camera 230, the at least one processor 150 may display a content related to exercise in the second sub area.

For example, if a context of the user is identified as 'getting ready to go out' based on an image obtained through the camera 230, the at least one processor 150 may display a content related to the weather, a content related to a schedule, a content related to coordination, etc. in the second sub area.

For example, if a context of the user is identified as 'study' based on an image obtained through the camera 230, the at least one processor 150 may display a content related to improving concentration, etc. in the second sub area.

According to an embodiment, the at least one processor 150 may provide a mirror image by controlling the reflectance of the mirror layer 210 in the partial area overlapping the switchable mirror 200, and display a content (e.g., a sub content) related to the user's context.

However, the disclosure is not limited thereto, and the at least one processor 150 may identify a context of a space (or, the ambient environment of the display device 100) other than the user's context, and display a content corresponding to the identified context.

For example, if the user does not exist in the space wherein the display device 100 is located, or the illumination is greater than or equal to a threshold value (or, smaller than a threshold value), the at least one processor 150 may display a predetermined content in at least one of the partial area or the remaining area, and control the reflectance of the switchable mirror 200 to a predetermined value.

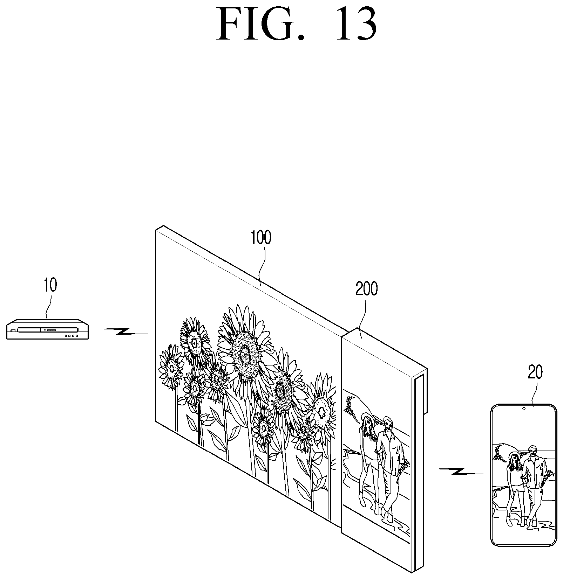

FIG. 13 is a diagram for illustrating a display device that displays a content received from a first external device and a content received from a second external device according to an embodiment of the disclosure.

Referring to FIG. 13, if the switchable mirror 200 is attached, the at least one processor 150 may display a content received from a first external device 10 in the remaining area excluding the partial area overlapping the switchable mirror 200, and display a content received from a second external device 20 in the partial area.

For example, the at least one processor 150 may continuously display a content displayed by the display panel 110 before the switchable mirror 200 was attached in the remaining area, and display a different content through the partial area overlapping the switchable mirror 200.

For example, the at least one processor 150 included in the display device 100 that is mirroring with the second external device 20 may display a content received from the second external device 20 through the partial area overlapping the switchable mirror 200.

For example, the at least one processor 150 may identify security levels (or, privacy levels) of each of the plurality of external devices, and display a content received from an external device (e.g., the first external device 10) having a low security level (or, a low privacy level) through the remaining area.

According to an embodiment, the at least one processor 150 may display a content received from an external device (e.g., the second external device 20) having a high security level among the plurality of external devices through the partial area.

However, this is merely an example for the convenience of explanation, and the disclosure is obviously not limited thereto.

For example, for providing a content displaying an image obtained through the camera 230 provided on the switchable mirror 200 (e.g., a non-face-to-face meeting, a non-face-to-face class, etc.) together with a mirror image, the at least one processor 150 may display the content through the partial area overlapping the switchable mirror 200. Also, the at least one processor 150 may adjust the reflectance of the mirror layer 210 provided on the switchable mirror 200 to exceed the minimum reflectance and to be smaller than the maximum reflectance.

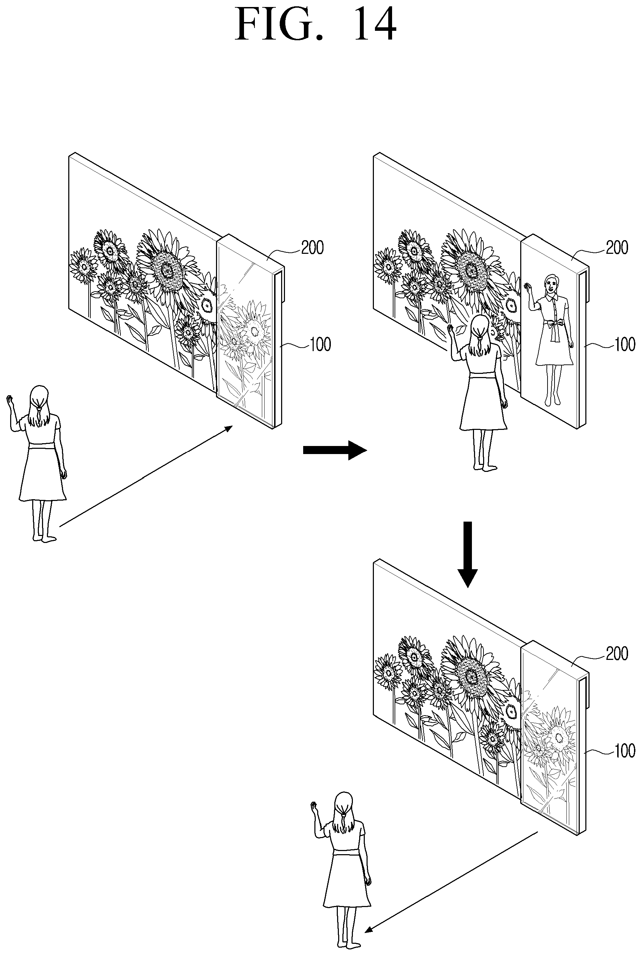

FIG. 14 is a diagram for illustrating a display device that controls a reflectance based on a context of a user, and provides at least one of a widget or a notification according to an embodiment of the disclosure.

Referring to FIG. 14, the camera 230 provided on the switchable mirror 200 may detect the ambient environment of the switchable mirror 200 (e.g., an object located on the front side of the switchable mirror 200).

According to an embodiment, if the user is not detected on the front side of the switchable mirror 200, or if the user is spaced apart from the display device 100 by greater than or equal to a threshold distance, the at least one processor 150 may adjust the reflectance of the mirror layer 210 to the minimum reflectance, and display a content through the entire area of the display panel 110.

According to an embodiment, if the user is located to be adjacent to the switchable mirror 200 (or, is approaching toward the switchable mirror 200), or a movement of the user is identified (e.g., if the user is exercising) based on an image obtained through the camera 230, the at least one processor 150 may increase the reflectance of the mirror layer 210 to provide a mirror image corresponding to the user.

Also, the at least one processor 150 may display a content corresponding to a context of the user (e.g., exercise, etc.) in the remaining area.

For example, if the remaining area is divided into a plurality of sub areas, the at least one processor 150 may display a content in the first sub area of a relatively big size among the plurality of sub areas, and display a content related to the user's context in the second sub area of a relatively small size.

According to an embodiment, if the user becomes far from the switchable mirror 200 or the user is not detected based on an image obtained through the camera 230, the at least one processor 150 may decrease the reflectance of the mirror layer 210.

However, the disclosure is not limited thereto, and the memory 120 provided on the display device 100 may store information about reflectance corresponding to each of a plurality of contexts, and the at least one processor 150 may identify a context based on an image obtained through the camera 230, and identify a reflectance corresponding to the identified context based on the information stored in the memory 120. Then, the at least one processor 150 may control the mirror layer 210 by the identified reflectance.

For example, the at least one processor 150 may identify a context by inputting an image obtained through the camera 230 into a neural network model trained to identify a context of the user, and identify a reflectance corresponding to the identified context based on the information stored in the memory 120.

However, the disclosure is not limited thereto, and the at least one processor 150 may identify a reflectance by inputting an image obtained through the camera 230 into a neural network model trained to obtain a reflectance corresponding to an image obtained through the camera 230.

The neural network model according to the various embodiments of the disclosure may be included in at least one of the display device 100 or the switchable mirror 200, and it can also obviously be included in an external server that can communicate with the display device 100.

Returning to FIG. 2, while displaying a content in the remaining area, if the size of the remaining area is changed according to moving of the switchable mirror 200, the at least one processor 150 may convert the content to correspond to the changed size, and display the content.

For example, the at least one processor 150 may convert the content by reflecting a change of the size of the remaining area according to moving of the switchable mirror 200 in real time.

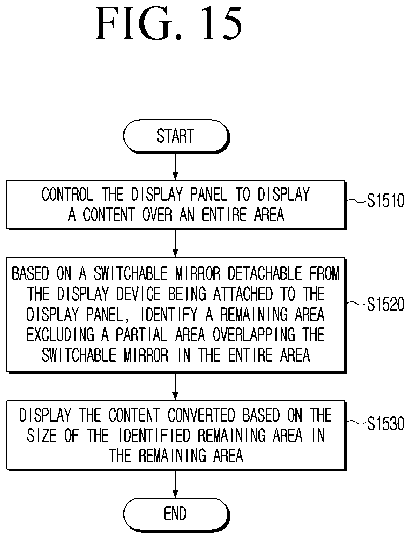

FIG. 15 is a flow chart for illustrating a method for controlling a display device according to an embodiment of the disclosure.

In a method for controlling a display device according to an embodiment of the disclosure, first, a display panel is controlled to display a content over the entire area in the step S1510.

If a switchable mirror detachable from the display device is attached to the display panel, a remaining area excluding a partial area overlapping the switchable mirror in the entire area is identified in the step S1520.

The content converted based on the size of the identified remaining area is displayed in the remaining area in the step S1530.

The controlling method according to an embodiment may further include the steps of controlling a reflectance of a mirror layer which is included in the switchable mirror, and is arranged on a front surface of the display panel when attached to the display panel, transmitting wireless power to a wireless power receiver which is included in the switchable mirror, and is arranged on a rear surface of the display panel when attached to the display panel, and adjusting a length to correspond to the thickness of the display panel through a connector which is included in the switchable mirror, and connects the mirror layer and the wireless power receiver.

The step of controlling the wireless power according to an embodiment may include the step of, based on the switchable mirror being attached to the display panel, transmitting wireless power to the wireless power receiver of the switchable mirror by a wireless power transmitter provided on the rear surface of the display panel.

The step of controlling the reflectance may include the steps of, based on an image received from a camera provided on the switchable mirror, identifying a content corresponding to an identified context and a reflectance corresponding to the identified context, displaying the content corresponding to the identified context in the remaining area, and controlling the reflectance of the mirror layer based on the reflectance corresponding to the identified context.

The step of controlling the reflectance may include the step of transmitting a signal for controlling the reflectance of the mirror layer to the switchable mirror, and the controlling method may include the step of, based on the reflectance of the mirror layer being between a minimum reflectance and a maximum reflectance, displaying at least one of a widget or a notification in the partial area overlapping the switchable mirror.

The step S1530 of displaying the converted content in the remaining area may include the steps of, based on it being a clear state wherein the reflectance of the mirror layer is controlled to the minimum reflectance, displaying the content in the entire area of the display panel, and based on it being a mirror state wherein the reflectance of the mirror layer is controlled to the maximum reflectance, displaying the content in the remaining area.

The controlling method according to an embodiment may further include the steps of receiving data corresponding to at least one of the widget or the notification from an external device, and displaying at least one of the widget or the notification in the partial area overlapping the switchable mirror based on the received data.

The step S1530 of displaying the converted content in the remaining area may include the steps of converting the content to correspond to a size of a first sub area included in the identified remaining area and displaying the content in the first sub area, and displaying at least one of a widget or a notification different from the content in a second sub area included in the identified remaining area, and the size of the first sub area may be bigger than the size of the second sub area.

The step S1530 of displaying the converted content in the remaining area may include the step of, while the content is being displayed in the remaining area, based on the size of the remaining area being changed according to moving of the switchable mirror, converting the content to correspond to the changed size and displaying the content in the remaining area.

According to an embodiment, at least one of a front surface or a rear surface of the display panel may include a sensor, and the controlling method may further include the step of identifying the partial area overlapping the switchable mirror in the entire area based on data obtained through the sensor, and the sensor may include at least one of a magnetic sensor, an illumination sensor, or a proximity sensor.

Meanwhile, the various embodiments of the disclosure can obviously be applied not only to a display device, but also to various types of electronic apparatuses including a mirror function and a display function.

Meanwhile, the aforementioned various embodiments may be implemented in a recording medium that can be read by a computer or a device similar to a computer by using software, hardware or a combination thereof. In some cases, the embodiments described in this specification may be implemented as a processor itself. According to implementation by software, the embodiments such as procedures and functions described in this specification may be implemented as separate software modules. Each of the software modules may perform one or more functions and operations described in this specification.

Meanwhile, computer instructions for performing processing operations of the display device 100 according to the aforementioned various embodiments of the disclosure may be stored in a non-transitory computer-readable medium. Computer instructions stored in such a non-transitory computer-readable medium make the processing operations at the display device 100 according to the aforementioned various embodiments performed by a specific machine, when the instructions are executed by a processor of the specific machine.

A non-transitory computer-readable medium refers to a medium that stores data semi-permanently, and is readable by machines, but not a medium that stores data for a short moment such as a register, a cache, and memory. As specific examples of a non-transitory computer-readable medium, there may be a CD, a DVD, a hard disc, a blue-ray disc, a USB, a memory card, ROM and the like.

While preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Also, it is intended that such modifications are not to be interpreted independently from the technical idea or prospect of the disclosure.

## Claims

1. A display device comprising:
a display panel; and
at least one processor configured to:
control the display panel to display a content over an entire area,
based on a switchable mirror detachable from the display device being attached to the display panel, identify a remaining area excluding a partial area overlapping the switchable mirror in the entire area, and
control the display panel such that the content converted based on the size of the identified remaining area is displayed in the remaining area.

2. The display device of claim 1,
wherein the switchable mirror comprises:
a mirror layer which is arranged on a front surface of the display panel when attached to the display panel, and whose reflectance can be adjusted;
a wireless power receiver which is arranged on a rear surface of the display panel when attached to the display panel; and
a connector which connects the mirror layer and the wireless power receiver, and whose length is adjustable to correspond to the thickness of the display panel.

3. The display device of claim 2, further comprising:
a wireless power transmitter which is provided on the rear surface of the display panel,
wherein the at least one processor is configured to:
based on the switchable mirror being attached to the display panel, control the wireless power transmitter to transmit wireless power to the wireless power receiver of the switchable mirror.

4. The display device of claim 2,
wherein the at least one processor is configured to:
based on an image received from a camera provided on the switchable mirror, identify a content corresponding to an identified context and a reflectance corresponding to the identified context,
control the display panel to display the content corresponding to the identified context in the remaining area, and
control the reflectance of the mirror layer based on the reflectance corresponding to the identified context.

5. The display device of claim 2,
wherein the at least one processor is configured to:
transmit a signal for controlling the reflectance of the mirror layer to the switchable mirror, and
based on the reflectance of the mirror layer being between a minimum reflectance and a maximum reflectance, control the display panel to display at least one of a widget or a notification in the partial area overlapping the switchable mirror.

6. The display device of claim 5,
wherein the at least one processor is configured to:
based on it being a clear state wherein the reflectance of the mirror layer is controlled to the minimum reflectance, control the display panel to display the content in the entire area of the display panel, and
based on it being a mirror state wherein the reflectance of the mirror layer is controlled to the maximum reflectance, control the display panel to display the content in the remaining area.

7. The display device of claim 5, further comprising:
a communication interface including circuitry,
receive data corresponding to at least one of the widget or the notification from an external device through the communication interface, and
control the display panel to display at least one of the widget or the notification in the partial area overlapping the switchable mirror based on the received data.

8. The display device of claim 1,
wherein the at least one processor is configured to:
convert the content to correspond to a size of a first sub area included in the identified remaining area and control the display panel to display the content in the first sub area,
control the display panel to display at least one of a widget or a notification different from the content in a second sub area included in the identified remaining area, and
wherein the size of the first sub area is bigger than the size of the second sub area.

9. The display device of claim 1,
wherein the at least one processor is configured to:
while the content is being displayed in the remaining area, based on the size of the remaining area being changed according to moving of the switchable mirror, convert the content to correspond to the changed size and control the display panel to display the content in the remaining area.

10. The display device of claim 1,
wherein at least one of a front surface or a rear surface of the display panel comprises:
a sensor, and
wherein the at least one processor is configured to:
identify the partial area overlapping the switchable mirror in the entire area based on data obtained through the sensor, and
wherein the sensor comprises:
at least one of a magnetic sensor, an illumination sensor, or a proximity sensor.

11. A method for controlling a display device, the method comprising:
controlling a display panel to display a content over an entire area;
based on a switchable mirror detachable from the display device being attached to the display panel, identifying a remaining area excluding a partial area overlapping the switchable mirror in the entire area; and
displaying the content converted based on the size of the identified remaining area in the remaining area.

12. The controlling method of claim 11,
wherein the controlling method further comprises:
controlling a reflectance of a mirror layer which is included in the switchable mirror, and is arranged on a front surface of the display panel when attached to the display panel;
transmitting wireless power to a wireless power receiver which is included in the switchable mirror, and is arranged on a rear surface of the display panel when attached to the display panel; and
adjusting a length to correspond to the thickness of the display panel through a connector which is included in the switchable mirror, and connects the mirror layer and the wireless power receiver.

13. The controlling method of claim 12,
wherein the controlling the wireless power comprises:
based on the switchable mirror being attached to the display panel, transmitting wireless power to the wireless power receiver of the switchable mirror by a wireless power transmitter provided on the rear surface of the display panel.

14. The controlling method of claim 12,
wherein the controlling the reflectance comprises:
based on an image received from a camera provided on the switchable mirror, identifying a content corresponding to an identified context and a reflectance corresponding to the identified context;
displaying the content corresponding to the identified context in the remaining area; and
controlling the reflectance of the mirror layer based on the reflectance corresponding to the identified context.

15. The controlling method of claim 12,
wherein the controlling the reflectance comprises:
transmitting a signal for controlling the reflectance of the mirror layer to the switchable mirror, and
wherein the controlling method comprises:
based on the reflectance of the mirror layer being between a minimum reflectance and a maximum reflectance, displaying at least one of a widget or a notification in the partial area overlapping the switchable mirror.
